Europäisches Patentamt

European Patent Office

Office européen des brevets

(11) Veröffentlichungsnummer: **0 102 007**
**B1**

# (12) EUROPÄISCHE PATENTSCHRIFT

(45) Veröffentlichungstag der Patentschrift:
01.06.88

(21) Anmeldenummer: 83107948.8

(22) Anmeldetag: 11.08.83

(51) Int. Cl.⁴: **C 08 G 18/08**, C 08 G 18/48,
C 08 F 20/10, C 08 K 5/09,
C 08 G 18/14

(54) Verfahren zur Herstellung von gegebenenfalls zellförmigen Formkörpern.

(30) Priorität: 24.08.82 DE 3231399

(43) Veröffentlichungstag der Anmeldung:
07.03.84 Patentblatt 84/10

(45) Bekanntmachung des Hinweises auf die Patenterteilung:
01.06.88 Patentblatt 88/22

(84) Benannte Vertragsstaaten:
BE DE FR GB IT NL SE

(56) Entgegenhaltungen:
AT - B - 344 402
FR - A - 2 260 593
GB - A - 1 048 852
US - A - 2 602 783
US - A - 4 301 063

Die Akte enthält technische Angaben, die nach dem Eingang der Anmeldung eingereicht wurden und die nicht in dieser Patentschrift enthalten sind.

(73) Patentinhaber: BAYER AG, Konzernverwaltung RP Patentabteilung, D-5090 Leverkusen 1 Bayerwerk (DE)

(72) Erfinder: Rasshofer, Werner, Dr., Wolfskaul 10,
D-5000 Koeln 80 (DE)
Erfinder: Schäfer, Hermann, Dr., Sürderstrasse 27,
D-5090 Leverkusen 1 (DE)
Erfinder: Paul, Reiner, Dr., Oberhausenerstrasse 55,
D-4330 Mülheim-Ruhr (DE)
Erfinder: Beuth, Josef, Moosweg 9,
D-5020 Frechen 4 (DE)

## Beschreibung

Die Erfindung betrifft ein neues Verfahren zur Herstellung von gegebenenfalls zellförmigen Formkörpern mit einer geschlossenen Aussenhaut und einer verbesserten Oberflächenbeschaffenheit auf Polyurethan- und/oder Polyharnstoff-Basis.

Die Herstellung von Formkörpern mit einer geschlossenen Aussenhaut und einem zelligen Kern nach dem Isocyanat-Polyadditionsverfahren ist grundsätzlich bekannt (vgl. z.B. Kunststoffe 60, Seiten 3–7 (1970) oder DE-A-1 196 864). Bei geeigneter Wahl der Ausgangskomponenten ist es bei diesem Verfahren möglich, sowohl elastische als auch starre Formkörper herzustellen. Falls bei dem Verfahren keine oder nur geringe Mengen an Treibmitteln mitverwendet werden, entstehen massive Formteile. Die Verarbeitung der Rohstoffe erfolgt vorzugsweise nach dem sogenannten Reaktionsspritzgussverfahren (RSG- oder RIM-Verfahren). Es handelt sich dabei um eine Fülltechnik, bei der die flüssigen Ausgangskomponenten über sogenannte zwangsgesteuerte Mischköpfe innerhalb kürzester Zeit in die jeweilige Form eingetragen werden. Bei der Herstellung von Formteilen für den Automobilbau werden hierbei beispielsweise di- und/oder trifunktionelle Polyetherpolyole, beispielsweise des Molekulargewichtsbereichs 3000 bis 7000 und niedermolekulare Diole wie Ethylenglykol und/oder Butandiol-1,4 bzw. aromatische Diamine mit sterisch gehinderten Aminogruppen mit Polyisocyanaten, vorzugsweise flüssigen Polyisocyanaten bzw. Polyisocyanatgemischen der Diphenylmethanreihe, gegebenenfalls in Gegenwart von Treibmitteln zur Reaktion gebracht (vgl. z.B. US-A-4 218 543 oder US-A-4 065 410). Die so hergestellten Formteile weisen ein ausgezeichnetes mechanisches Eigenschaftsniveau auf. Es hat sich jedoch gezeigt, dass die Formteile mitunter eine Oberfläche aufweisen, die nicht gänzlich frei von Vertiefungen und Poren ist. Solche Oberflächenstörungen lassen sich durch Einreiben des Formteils mit einem Farbpulver sichtbar machen und geben sich durch einen aufhellenden, lichtstreuenden Effekt gegenüber einer tiefschwarzen (Einfärbung mit Graphit), ungestörten Oberfläche zu erkennen. Darüber hinaus sind diese Oberflächenstörungen oft Ansatzpunkte für etwaige mechanisch bewirkte Beschädigungen.

Solche Oberflächenstörungen in Form von Poren oder Narben, sogenannten «pin holes» müssen oft mit einer Reparatur- oder Füllmasse gespachtelt und nachfolgend geschliffen, evtl. vorher und nachher entfettet, sowie gegebenenfalls lackiert werden und erfordern somit zu ihrer Beseitigung einen hohen Aufwand.

Es war daher die der Erfindung zugrundeliegende Aufgabe, ein Verfahren bereitzustellen, das die Herstellung von Polyurethanformkörpern ohne derartige Oberflächendefekte erlaubt.

Diese Aufgabe konnte mit dem nachstehend näher beschriebenen erfindungsgemässen Verfahren gelöst werden.

Gegenstand der Erfindung ist ein Verfahren zur Herstellung von gegebenenfalls zellförmigen Formkörpern auf Polyurethan- und/oder Polyharnstoff-Basis mit einer geschlossenen Oberfläche durch Umsetzung in einer geschlossenen Form eines Reaktionsgemisches aus

a) mindestens einem organischen Polyisocyanat,

b) mindestens einer Verbindung mit einem Molekulargewicht zwischen 400 und 12 000, welche mindestens zwei gegenüber Isocyanatgruppen reaktionsfähige Gruppen aufweist,

c) gegebenenfalls mindestens einer Verbindung mit einem Molekulargewicht zwischen 32 und 399 mit mindestens zwei gegenüber Isocyanatgruppen reaktionsfähigen Gruppen, und

d) gegebenenfalls den in der Polyurethanchemie an sich bekannten Hilfs- und Zusatzstoffen, dadurch gekennzeichnet, dass man dem Reaktionsgemisch vor der Umsetzung oberflächenverbessernde Zusatzmittel e), bestehend aus den Einzelkomponenten

e1) mindestens einem, bei Raumtemperatur flüssigen, im Reaktionsgemisch löslichen, gegenüber Isocyanatgruppen inerten Polymerisat oder Copolymerisat des dampfdruckosmometrisch bestimmbaren Molekulargewichts 200 bis 50 000 mindestens eines olefinisch ungesättigten Monomeren in einer Menge von 0,01 bis 1 Gew.-%, bezogen auf die Komponente b), und

e2) mindestens ein Carboxylat eines Metalls der 1.–3. Hauptgruppe oder der 2. Nebengruppe des Periodensystems der Elemente auf Basis einer Monocarbonsäure mit mindestens 8 Kohlenstoffatomen, in einer Menge von 0,01 bis 2 Gew.-%, bezogen auf die Komponente b) einverleibt.

Die Verwendung von gegenüber Isocyanatgruppen inerten Polymerisaten bzw. Copolymerisaten bei der Herstellung von Polyurethanschaumstoffen ist im Prinzip bereits bekannt (GB-A-1 048 852 bzw. US-A-3 085 983). Bei den vorbekannten Verfahren werden die Polymerisate bzw. Copolymerisate als Schaumstabilisatoren bzw. Zellregler mitverwendet. Der erfindungsgemäss aufgefundene Effekt, dass derartige Polymerisate bzw. Copolymerisate in sehr geringen Mengen in Kombination mit den nachstehend näher beschriebenen Metallcarboxylaten bei der Herstellung von Polyurethanformteilen mit einer geschlossenen Oberflächenschicht zelldestabilisierend wirken, d.h. zu einem Kollaps der Zellen und so zu einer glatteren und störungsfreien Oberfläche führen, muss im Licht der zitierten Vorveröffentlichungen als äusserst überraschend angesehen werden.

Beim erfindungsgemässen Verfahren kommen als Ausgangskomponente a) beliebige aliphatische, cycloaliphatische, araliphatische, aromatische oder heterocyclische Polyisocyanate in Betracht. Geeignete Polyisocyanate sind beispielsweise die in US-A-4 065 410, Kolonne 2, Zeile 29 bis Kolonne 3, Zeile 22 beispielhaft genannten Verbindungen. Zu den bevorzugten Ausgangsmaterialien a) gehören die bei Raumtemperatur flüssigen Derivate des 4,4'-Diisocyanatodiphenylme-

thans, beispielsweise die Urethangruppen aufweisenden Polyisocyanate, die gemäss DE-B-1 618 380 (US-A-3 644 457) durch Umsetzung von 1 Mol 4,4'-Diisocyanatodiphenylmethan mit 0,05 bis 0,3 Molen an niedermolekularen Diolen oder Triolen, vorzugsweise Polypropylenglykolen mit einem unter 700 liegenden Molekulargewicht, zugänglich sind, oder Carbodiimid- und/oder Uretonimingruppen aufweisende Diisocyanate auf Basis von 4,4'-Diisocyanatodiphenylmethan, wie sie beispielsweise gemäss US-A-3 152 162, US-A-3 384 653, US-A-3 449 256, US-A-4 154 752 oder DE-A-2 537 685 zugänglich sind. Auch die entsprechenden Modifizierungsprodukte auf Basis von Gemischen aus 2,4'- und 4,4'-Diisocyanatodiphenylmethan oder auch Gemische der wie beschrieben modifizierten 4,4'-Diisocyanatodiphenylmethane mit untergeordneten Mengen an höher als difunktionellen Polyisocyanaten der Diphenylmethanreihe, beispielsweise solchen der in DE-A-2 624 526 beschriebenen Art, gehören zu den bevorzugten Polyisocyanaten. Im allgemeinen handelt es sich bei den bevorzugten, erfindungsgemäss einzusetzenden Polyisocyanaten um bei Raumtemperatur flüssige, gegebenenfalls wie beschrieben chemisch modifizierte Polyisocyanate bzw. Polyisocyanatgemische der Diphenylmethanreihe einer (mittleren) NCO-Funktionalität von 2–2,2, insbesondere von 2, in denen als Hauptkomponente (mehr als 50 Gew.-%) 4,4'-Diisocyanatodiphenylmethan vorliegt.

Bei der Ausgangskomponente b) handelt es sich um mindestens eine Verbindung mit mindestens zwei gegenüber Isocyanatgruppen reaktionsfähigen Wasserstoffatomen und einem, aus der Funktionalität und dem Gehalt an gegenüber Isocyanatgruppen reaktionsfähigen Gruppen berechenbaren (durchschnittlichen) Molekulargewicht von 400 bis 12 000, vorzugsweise 1000 bis 7000 und insbesondere 2000 bis 6000. Besonders bevorzugt werden als Ausgangskomponente b) di- und/oder trifunktionelle Polyetherpolyole eingesetzt. Diese Polyetherpolyole werden in bekannter Weise beispielsweise durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren wie BF$_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-(1,3) oder -(1,2), Trimethylolpropan, Glycerin, Sorbit, 4,4'-Dihydroxydiphenylpropan, Anilin, Ethanolamin oder Ethylendiamin hergestellt. Auch Sucrosepolyether, wie sie z.B. in DE-A-1 176 358 und 1 064 938 beschrieben werden, sowie auf Formit oder Formose gestartete Polyether (DE-A-2 639 038 bzw. 2 737 951), kommen erfindungsgemäss in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen.

Als Ausgangskomponente b) kommen auch die sogenannten Aminopolyether oder Aminohydroxypolyether des obengenannten Molekulargewichtsbereichs in Betracht, deren endständige, gegenüber Isocyanatgruppen reaktionsfähige Gruppen zumindest zu 25, vorzugsweise zu 50, und insbesondere zu 80–100 Äquivalentprozent aus primären und/oder sekundären, aromatisch oder aliphatisch gebundenen Aminogruppen und zum Rest aus primären und/oder sekundären, aliphatisch gebundenen Hydroxylgruppen bestehen.

In diesen Verbindungen können die die Aminogruppen tragenden, endständigen Reste mit der Polyetherkette auch über Urethan- oder Estergruppen verknüpft sein. Die Herstellung dieser «Aminopolyether» erfolgt in an sich bekannter Weise. So kann beispielsweise eine Aminierung von Polyhydroxypolyethern wie z.B. Polypropylenglykolethern durch Reaktion mit Ammoniak in Gegenwart von Raney-Nickel und Wasserstoff durchgeführt werden (BE-A-634 741). US-A-3 654 370 beschreibt die Herstellung von Polyoxyalkylenpolyaminen durch Umsetzung des entsprechenden Polyols mit Ammoniak und Wasserstoff in Gegenwart eines Nickel-, Kupfer-, Chrom-Katalysators. In der DE-B-1 193 671 wird die Herstellung von Polyethern mit Amino-Endgruppen durch Hydrierung von cyanethylierten Polyoxypropylenethern beschrieben. Weitere Methoden zur Herstellung von Polyoxyalkylen-(Polyether)-aminen sind in US-A-3 155 728, US-A-3 236 895 und FR-A-1 551 605 beschrieben. In der FR-A-1 466 708 wird beispielsweise die Herstellung von sekundäre Amino-Endgruppen aufweisenden Polyethern beschrieben.

Höhermolekulare Polyhydroxypolyether können durch Reaktion mit Isatosäureanhydrid in die entsprechenden, erfindungsgemäss als Komponente b) geeigneten Anthranilsäureester überführt werden, wie dies beispielsweise in DE-A-2 019 432, DE-A-2 619 840, US-A-3 808 250, US-A-3 975 428 oder US-A-4 016 143 beschrieben ist. Auf diese Weise entstehen Polyether mit endständigen aromatischen Aminogruppen.

Durch Umsetzung von NCO-Präpolymeren auf Basis von Polyhydroxypolyethern mit Hydroxylgruppen aufweisenden Enaminen, Aldiminen oder Ketiminen und anschliessende Hydrolyse erhält man gemäss DE-A-2 546 536 bzw. US-A-3 865 791 höhermolekulare, endständige Aminogruppen aufweisende Verbindungen.

Ebenfalls einsetzbar sind andere Amino-Polyether des obengenannten Molekulargewichtsbereichs, wie sie beispielsweise gemäss DE-A-2 948 419 oder gemäss DE-A-3 039 600 erhalten werden können.

Selbstverständlich können als erfindungsgemässe Ausgangskomponente b) auch beliebige Gemische der beispielhaft genannten Verbindungen mit gegenüber Isocyanatgruppen reaktionsfähigen Gruppen eingesetzt werden.

Die erfindungsgemäss als Ausgangskomponente b) in Betracht kommenden Verbindungen mit gegenüber Isocyanatgruppen reaktionsfähigen Gruppen sind nicht auf die oben beispielhaft erwähnten Verbindungen begrenzt.

So können beispielsweise beim erfindungsgemässen Verfahren alle in der US-A-4 218 543 beispielhaft beschriebenen Verbindungen mit gegenüber Isocyanatgruppen reaktionsfähigen Gruppen des Molekulargewichtsbereichs 400 bis 12 000 eingesetzt werden.

Bei den gegebenenfalls mitzuverwendenden Ausgangsverbindungen c) handelt es sich um beliebige, mindestens zwei primäre bzw. sekundäre Aminogruppen und/oder Hydroxylgruppen aufweisende Kettenverlängerungsmittel bzw. Vernetzungsmittel des Molekulargewichtsbereichs 32 (Hydrazin) bis 399. Vorzugsweise werden die entsprechenden difunktionellen Verbindungen eingesetzt.

Als Beispiele für derartige Verbindungen seien genannt: Hydrazin, Ethylendiamin, Hexamethylendiamin, 1-Amino-3,3,5-trimethyl-5-aminomethyl-cyclohexan (IPDA), N,N'-Dimethylhydrazin, Ethylenglykol, Propylenglykol-(1,2) und -(1,3), 1,4-Dihydroxybutan, 1,6-Dihydroxyhexan, Glycerin, Trimethylolpropan, Pentaerythrit, Chinit, Mannit, Diethylenglykol, Triethylenglykol, Tetraethylenglykol, Dipropylenglykol, Tripropylenglykol, Dibutylenglykol, Diethanolamin, Diisopropanolamin, 1,4-Diaminobenzol, 2,4-Diaminotoluol oder 4,4'-Diaminodiphenylmethan.

Zu den bevorzugten, beim erfindungsgemässen Verfahren als Komponente c) einzusetzenden Verbindungen gehören diprimäre aromatische Diamine, deren Molekulargewicht innerhalb des obengenannten Bereichs liegt, und die zumindest in jeweils einer ortho-Stellung zu den Aminogruppen einen Alkylsubstituenten aufweisen, insbesondere um solche, die in ortho-Stellung zu der ersten Aminogruppe mindestens einen Alkylsubstituenten und in ortho-Stellung zur zweiten Aminogruppe zwei Alkylsubstituenten mit jeweils 1 bis 3 Kohlenstoffatomen, aufweisen, besonders bevorzugt um solche, die in jeweils mindestens einer ortho-Stellung zu den Aminogruppen einen Ethyl-, n-Propyl- und/oder iso-Propyl-Substituenten und gegebenenfalls in weiteren ortho-Stellungen zu den Aminogruppen Methylsubstituenten aufweisen.

Beispiele für solche bevorzugten bzw. besonders bevorzugten Diamine sind 2,4-Diaminomesitylen, 1,3,5-Triethyl-2,4-diaminobenzol, 1,3,5-Triisopropyl-2,4-diaminobenzol, 1-Methyl-3,5-diethyl-2,4-diaminobenzol, 1-Methyl-3,5-diethyl-2,6-diaminobenzol, 4,6-Dimethyl-2-ethyl-1,3-diaminobenzol, 3,5,3',5'-Tetraethyl-4,4'-diaminodiphenylmethan, 3,5,3',5'-Tetraisopropyl-4,4'-diaminodiphenylmethan oder 3,5-Diethyl-3',5'-diisopropyl-4,4'-diaminodiphenylmethan.

Zu den bevorzugten erfindungsgemäss als Komponente c) einzusetzenden Verbindungen gehören ausserdem aliphatische Diole des Molekulargewichtsbereichs 62 bis 200 wie z.B. Ethylenglykol, 1,2-Dihydroxypropan und 1,4-Dihydroxybutan. Beliebige Gemische alkoholischer und/oder aminischer Aufbaukomponenten c) können selbstverständlich ebenfalls eingesetzt werden.

Die Aufbaukomponente c) kommt beim erfindungsgemässen Verfahren insbesondere in Mengen von 0 bis 50, vorzugsweise von 10 bis 40 Gew.-%, bezogen auf Komponente b) zum Einsatz.

Beim erfindungsgemässen Verfahren können als weitere Komponenten d) die aus der Polyurethanchemie an sich bekannten Hilfs- und Zusatzmittel mitverwendet werden. Hierzu gehören beispielsweise

1. Treibmittel wie z.B.: Aceton, Ethylacetat und insbesondere halogensubstituierte Alkane wie Dichlormethan, Trichlormethan, Monofluortrichlormethan, Chlordifluormethan oder Dichlordifluormethan. Die Mitverwendung von Wasser ist prinzipiell möglich, jedoch weniger bevorzugt.

2. Katalysatoren für die Isocyanat-Polyadditions-Reaktion der an sich bekannten Art, wie sie beispielsweise in US-A-4 065 410, Kolonne 5, Zeile 59 bis Kolonne 6, Zeile 30 beschrieben sind.

3. Oberflächenaktive Additive und sonstige Zusatzstoffe, wie sie beispielsweise in US-A-4 065 410, Kolonne 6, Zeile 34 bis Kolonne 7, Zeile 2 beschrieben sind.

4. Innere Formtrennmittel, wie sie beispielsweise in US-A-3 726 952, GB-A-1 365 215, US-A-4 058 492, US-A-4 033 912, US-A-4 024 090 oder US-A-4 098 731 beschrieben sind.

Weitere Beispiele von gegebenenfalls erfindungsgemäss mitzuverwendenden Hilfs- und Zusatzmitteln, d.h. von oberflächenaktiven Zusatzstoffen und Schaumstabilisatoren, flammhemmenden Substanzen, Weichmachern, Farbstoffen und Füllstoffen, fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113, beschrieben.

Erfindungswesentlich ist die Mitverwendung von oberflächenverbessernden Zusatzmitteln e), die sich aus zwei Einzelkomponenten e1) und e2) zusammensetzen.

Bei der Komponente e1) handelt es sich um bei Raumtemperatur flüssige, in dem Reaktionsgemisch lösliche, gegenüber Isocyanatgruppen inerte Polymerisate oder Copolymerisate von olefinisch ungesättigten Monomeren des dampfdruckosmometrisch bestimmbaren Molekulargewichts · 200 bis 50 000, vorzugsweise 2000 bis 30 000 und besonders bevorzugt 5000 bis 15 000. Die Polymerisate bzw. Copolymerisate weisen bei 100°C im allgemeinen eine Viskosität von 1 bis 1000 Pa.s auf. Vorzugsweise handelt es sich bei den Polymerisaten bzw. Copolymerisaten um solche aus 50 bis 100 Gew.-Teilen mindestens eines $C_1$–$C_{18}$-Alkylesters, vorzugsweise $C_1$–$C_{10}$-Alkylesters der Acryl- oder Methacrylsäure und 0 bis 50 Gew.-Teilen an anderen gegenüber Isocyanatgruppen inerten, olefinisch ungesättigten Monomeren.

Beispiele für als Monomere zur Herstellung der Polymerisate bzw. Copolymerisate geeignete $C_1$–$C_{18}$-Alkylester sind Acrylsäure-methylester, Acrylsäure-ethylester, Acrylsäure-n-butylester, Acrylsäure-n-pentylester, Acrylsäure-n-hexylester, Acrylsäure-2-ethylhexylester, Acrylsäuredecylester, Acrylsäuredodecylester, Acrylsäureoctadecylester bzw. die entsprechenden Methacrylsäureester. Beispiele für sonstige Monomere sind beliebige olefinisch ungesättigte, gegenüber Isocyanatgruppen inerte Verbindungen wie z.B. Ethylen, Propylen, Styrol, Itaconsäureester, Vinylacetat, Diallylphthalat, Acrylnitril oder Methacrylnitril.

Grundsätzlich ist es auch möglich, als Komponente e1) ganz oder teilweise Acrylester- bzw. Methacrylester-freie Polymerisate wie beispielsweise den oben gemachten Ausführungen entsprechende Polystyrole oder Styrolcopolymere einzusetzen.

Die Herstellung der Polymerisate bzw. Copolymerisate erfolgt nach bekannten Verfahren der Substanz-, Lösungs- und Dispersionspolymerisation und Perlpolymerisation, vorzugsweise durch Lösungs- oder Substanzpolymerisation. Derartige Verfahren sind beispielsweise beschrieben in «Methoden der Organischen Chemie», Houben-Weyl, 4. Auflage, Band 14/1, Seiten 24–556 (1961).

Wird in Lösung polymerisiert, so können Lösungsmittel, wie Methylenchlorid, Ethanol, iso-Propanol, n-Propanol, n-Butanol, iso-Butanol, tert.-Butanol, Essigsäuremethyl- bis -butylester, Aceton, Methylethylketon, Benzol, Toluol u.a. eingesetzt werden.

Die Polymerisationen werden bei Temperaturen von 40 bis etwa 180 °C durchgeführt.

Als Initiatoren können beispielsweise Percarbonate, Perester, wie tert.-Butylperpivalat, -peroctoat, Benzoylperoxid, o-Methoxybenzoylperoxid, Dichlorbenzoylperoxid, Azodiisobuttersäurenitril, in Mengen von 0,5 bis 3 Gew.-%, bezogen auf Monomere, eingesetzt werden.

Weiter können übliche Molekulargewichtsregler, wie Thioglykol, Thioglycerin, Methylvinylcarbinol, Xanthogenate oder tert.-Dodecylmercaptan mitverwendet werden.

Die (Co)Polymerisatlösung wird vor der Verwendung der (Co)Polymerisate vorzugsweise in geeigneten Vorrichtungen, vorzugsweise Verdampferschnecken oder Dünnfilmverdampfer, bei Temperaturen von etwa 90 bis 180 °C von Lösungsmittel befreit.

Die Substanzpolymerisation kann zum Beispiel nach dem in der DE-OS-1 965 740 beschriebenen Verfahren durchgeführt werden

Die Zusatzmittel e1) sind bei Raumtemperatur ölige bis hochviskose Flüssigkeiten, die sich sehr gut in hydrophoben Lösungsmitteln wie Dichlor-, Trichlor-, Tetrachlormethan oder Trichlorfluormethan, gut aber auch in hydrophilen Lösungsmitteln wie z.B. Glykol oder höhermolekularen Polyethylen- oder Polypropylenglykolen lösen. Bei der Durchführung des erfindungsgemässen Verfahrens kommt die Zusatzmittelkomponente e1) vorzugsweise in Form einer Lösung mit einem Feststoffgehalt von beispielsweise 25–75 Gew.-% in einem hydrophoben Lösungsmittel (Treibmittel) der beispielhaft genannten Art zum Einsatz.

Bei der Komponente e2) handelt es sich um Salze eines Metalls der 1.–3. Hauptgruppe oder der 2. Nebengruppe des Periodensystems der Elemente und einer Monocarbonsäure mit insgesamt mindestens 8, vorzugsweise 8 bis 18 Kohlenstoffatomen. Bei den Carbonsäuren handelt es sich vorzugsweise um gegebenenfalls olefinisch ungesättigte aliphatische oder cycloaliphatische Carbonsären wie z.B. Octancarbonsäure, Dodecancarbonsäure, Stearinsäure, Ölsäure, Linolsäure, Linolensäure, Tallölsäure, Arachidonsäure, Myristinsäure, Palmitinsäure, Margarinsäure, Arachinsäure, Cerotinsäure, Melissinsäure, Erucasäure, Abietinsäure oder Naphthensäuren. Bei den Zusatzmitteln e2) handelt es sich somit um Salze beispielsweise der Alkalimetalle, insbesondere von Natrium oder Kalium, der Erdalkalimetalle, insbesondere des Magnesiums oder des Calciums, um Salze des Aluminiums oder um Salze des Zinks. Die Zinksalze sind besonders bevorzugt.

Die Komponente e2) wird beim erfindungsgemässen Verfahren im allgemeinen in einer Menge von 0,01 bis 2, vorzugsweise 0,05 bis 1 Gew.-%, bezogen auf die Komponente b) eingesetzt.

Bei der Durchführung des erfindungsgemässen Verfahrens kommen die Reaktionspartner im übrigen in einer NCO-Kennzahl von 70 bis 130, vorzugsweise 90 bis 110, entsprechenden Mengen zum Einsatz. Unter NCO-Kennzahl versteht man hierbei den Quotienten aus Anzahl der Isocyanatgruppen und Anzahl der gegenüber Isocyanaten reaktiven Gruppen, multipliziert mit 100. In die Berechnung der Isocyanat-Kennzahl gehen hierbei die gegebenenfalls in den Trennmitteln vorliegenden, gegenüber Isocyanatgruppen reaktionsfähigen Gruppen (Carboxylgruppen) nicht ein. Bei der Durchführung des erfindungsgemässen Verfahrens wird vorzugsweise nach der bekannten Reaktionsspritzgusstechnik (RSG-Verfahren) gearbeitet. Hierbei kommen im allgemeinen zwei Reaktionskomponenten zum Einsatz, wobei die Polyisocyanatkomponente a) die erste und die «NCO-reaktive Komponente», d.h. das Gemisch der Komponenten b) und c), die zweite Reaktionskomponente darstellen. Die gegebenenfalls mitzuverwendenden Komponenten d) und die Komponente e) werden im allgemeinen der «NCOreaktiven Komponente» zugemischt, jedoch kann es auch zweckmässig sein, beispielsweise bei der Verwendung von Isocyanatgruppen aufweisenden Trennmitteln diese vor der Durchführung des erfindungsgemässen Verfahrens der Polyisocyanatkomponente a) einzuverleiben. Grundsätzlich ist es selbstverständlich auch möglich, solche Mischköpfe zu verwenden, die den Einsatz von drei oder vier getrennten Komponenten bei der Durchführung des erfindungsgemässen Verfahrens gestatten, so dass eine Vormischung der Einzelkomponenten nicht erforderlich ist. Die Menge des in die Form eingebrachten, gegebenenfalls schäumfähigen Gemischs wird im übrigen so bemessen, dass die Formkörper eine Dichte von 0,1–1,4 g/cm³, vorzugsweise von 0,2–1,3 g/cm³, aufweisen. Insbesondere bei der Mitverwendung von mineralischen Füllstoffen können Formkörper mit einer über 1,2 g/cm³ liegenden Dichte resultieren. Die Formkörper können oft schon nach einer Formstandzeit von 5 bis 90, vorzugsweise 20 bis 60, Sekunden entformt werden.

Als Ausgangstemperatur des in die Form eingebrachten Gemisches wird im allgemeinen eine Temperatur zwischen 10 und 60°C, vorzugsweise 20 bis 50°C, gewählt. Die Temperatur der Form beträgt im allgemeinen 40 bis 100°C, vorzugsweise 50 bis 70°C.

Grundsätzlich ist es auch möglich, bei der Durchführung des erfindungsgemässen Verfahrens aus der Komponente a) und zumindest einem Teil der Komponente b) und/oder c) ein NCO-Präpolymer herzustellen und dieses in einer zweiten Reaktionsstufe mit der restlichen Menge der Komponenten b) bzw. c) zur Umsetzung zu bringen. Eine derartige zweistufige Arbeitsweise ist jedoch weniger bevorzugt.

Die nach dem erfindungsgemässen Verfahren hergestellten Formkörper zeichnen sich durch eine verbesserte, d.h. homogenere Oberflächenbeschaffenheit im Vergleich zu entsprechenden Formkörpern, die ohne Mitverwendung der Komponente e) hergestellt worden sind, aus. Die nach dem erfindungsgemässen Verfahren erhältlichen Formkörper eignen sich insbesondere zur Herstellung von flexiblen Automobilstossstangen bzw. Karosserieelementen und für den Innenausbau von Automobilen, wie z.B. Konsolen, Seitenverkleidungen oder Armaturenbrettern, ferner zur Herstellung von Fahrrad- oder Motorradsätteln. Durch geeignete Variation der Ausgangskomponenten a) bis d), insbesondere bei relativ geringem Anteil an aminischen Aufbaukomponenten, können auch z.B. flexible Schuhsohlen mit gutem Abriebverhalten und ausgezeichneter mechanischer Festigkeit erhalten werden.

In den nachfolgenden Beispielen beziehen sich alle Prozentangaben auf Gewichtsprozente und alle Angaben in «Teilen» auf Gewichtsteile.

In den nachfolgenden Beispielen kommen folgende Polymerisate bzw. Polymerisat-Lösungen zum Einsatz:

Polymerisatlösung A

Mischung aus einem Teil Dichlormethan und einem Teil eines Copolymerisats aus 30% Ethylacrylat und 70% Ethylhexylacrylat mit einem durchschnittlichen Molekulargewicht von 10 000.

Polymerisatlösung B

Mischung aus einem Teil Dichlormethan und einem Teil Polyethylhexylacrylat des durchschnittlichen Molekulargewichts 8000.

Polymerisatlösung C

Mischung aus einem Teil Dichlormethan und einem Teil eines Copolymerisats aus 70% n-Butylacrylat und 30% n-Butylmethacrylat mit einem durchschnittlichen Molekulargewicht von 10 500.

Polymerisatlösung D

Mischung aus einem Teil Dichlormethan und einem Teil eines Copolymerisats aus 50% Ethylhexylacrylat und 50% Decylmethacrylat mit einem durchschnittlichen Molekulargewicht von 10 000.

Polymerisatlösung E

Mischung aus einem Teil Dichlormethan und einem Teil eines Copolymerisats aus 75% Ethylhexylacrylat und 25% n-Butylacrylat mit einem durchschnittlichen Molekulargewicht von 11 000.

Polymerisatlösung F

Mischung aus einem Teil Dichlormethan und einem Teil eines Copolymerisats aus 50% n-Butylacrylat und 50% Ethylhexylacrylat mit einem durchschnittlichen Molekulargewicht von 9500.

Polymerisatlösung G

Mischung aus einem Teil Dichlormethan und einem Teil eines Copolymerisats aus 50% n-Butylacrylat, 20% Ethylhexylacrylat und 30% Methacrylnitril mit einem durchschnittlichen Molekulargewicht von 15 000.

Die den Polymerisatlösungen A bis G zugrundeliegenden Polymerisate wurden gemäss folgendem allgemeinem Verfahren hergestellt:

In einem 0,3 l-Rührtopf werden unter Stickstoff die in der Tabelle 1 aufgeführten Monomeren und

Tabelle 1

| | | A | B | C | D | E | F | G |
|---|---|---|---|---|---|---|---|---|
| Monomere | Ethylacrylat | 30 | — | — | — | — | — | — |
| | n-Butylacrylat | — | — | 70 | — | 25 | 50 | 50 |
| | Ethylhexylacrylat | 70 | 100 | — | 50 | 75 | 50 | 20 |
| | n-Butylmethacrylat | — | — | 30 | — | — | — | — |
| | Methacrylnitril | — | — | — | — | — | — | 30 |
| | Decylmethacrylat | — | — | — | 50 | — | — | — |
| Lösungsmittel | Toluol | 60 | — | 60 | — | 60 | — | 60 |
| | Isobutanol | — | 60 | — | 60 | — | — | — |
| | Methylglykolacetat | — | — | — | — | — | 60 | — |
| Eigenschaften der Polymerisate | $\eta$ (mPa.s) | 6 | 380 | 98 | 430 | 32 | 650 | 289 |
| | Mol-Gewicht (dampfdruckosmometrisch in Aceton) | 10 000 | 8000 | 10 500 | 10 000 | 11 000 | 9500 | 15 000 |

Lösungsmittel gemischt und auf Rückflusstemperatur gebracht. Innerhalb von 5 Stunden werden 1,5 g tert.-Butylperoctoat eindosiert, anschliessend wird während 8 Stunden bei 100 °C nachgerührt. Unter Vakuum wird dann das Lösungsmittel abdestilliert, wobei das Polymerisat im Laufe der Destillation bei einem Vakuum von 0,133 mbar auf 160 °C erhitzt wird. Die lösungsmittelfreien Polymerisate fallen als Destillationsrückstand an.

### Beispiel 1

90 Teile eines Polyetherpolyols der OH-Zahl 27, hergestellt durch Propoxylierung von Trimethylolpropan und anschliessendes Ethoxylieren des Propoxylierungsprodukts, 17 Teile Ethylenglykol, 5 Teile einer Russpaste (20% Russ in 80% eines durch Propoxylierung und anschliessende Ethoxylierung von Trimethylolpropan hergestellten Polyetherpolyols der OH-Zahl 35) 0,4 Teile Triethylendiamin, 0,04 Teile Dibutylzinndilaurat und 1 Teil Zinkstearat werden jeweils mit 0,2 Teilen der Polymerisatlösungen A–G, gelöst in jeweils 10 Teilen Trichlorfluormethan zu den Polyolkomponenten 1A–1G vermischt.

Ausserdem wird eine Diisocyanatkomponente mit einem NCO-Gehalt von 23%, die durch Umsetzung von 4,4'-Diisocyanatodiphenylmethan mit Tripropylenglykol erhalten wurde, verwendet.

Jeweils 100 Teile der Polyolkomponenten A–G werden mit 99 Teilen der Polyisocyanatkomponente (NCO-Kennzahl = 105) durch intensives Rühren bei Raumtemperatur miteinander vereinigt. Jeweils 240 ml der so erhaltenen Reaktionsgemische werden nach einer Rührzeit von 10 Sekunden in auf 60 °C temperierte, verschliessbare Aluminiumformen der Dimension 20 × 20 × 1 cm, deren Oberfläche mit einem handelsüblichen Trennmittel auf Wachsbasis (P 180 der Firma Acmos) beschichtet wurde, eingefüllt. Nach einer Formstandzeit von 5 Minuten werden die Formkörper der Form entnommen und beurteilt. Bei den erhaltenen Formkörpern handelt es sich um tiefschwarz-glänzende Formplatten mit einer kompakten dicken Oberflächenschicht, die an der Oberfläche keinerlei sichtbare Unregelmässigkeiten erkennen lassen. Ein entsprechend, jedoch ohne Mitverwendung von Zinkstearat und erfindungswesentlichem Polymerisat hergestellter Formkörper weist demgegenüber eine matte rauhe Oberfläche bei einer wesentlich geringeren Dicke der kompakten Oberflächenschicht auf.

### Beispiel 2

70 Teile eines Polyetherdiols der OH-Zahl 28, welches durch Propoxylierung von 1,2-Dihydroxypropan und anschliessendes Ethoxylieren des Propoxylierungsprodukts erhalten wurde, 20 Teile des Polyethertriols der Russpaste gemäss Beispiel 1, 1 Teil Ethylenglykol, 14 Teile 1,4-Dihydroxybutan, 0,3 Teile Triethylendiamin, 0,2 Teile Dibutylzinndilaurat und 0,75 Teile Zinkstearat werden jeweils mit Lösungen von 1 Teil der Polymerisatlösungen A–G in 8 Teilen Trichlorfluormethan zu den Polyolkomponenten 2A–2G vereinigt.

115 Teile der so hergestellten Polyolkomponenten A–G werden entsprechend Beispiel 1 mit jeweils 74 Teilen (NCO-Kennzahl = 102) eines Umsetzungsprodukts aus 4,4'-Diisocyanatodiphenylmethan mit Tripropylenglykol (NCO-Gehalt = 23%) zu schäumfähigen Gemischen vereinigt und zu Formkörpern verarbeitet. Ebenso wie die Formkörper gemäss Beispiel 1 weisen die so erhaltenen Formteile eine einwandfreie Oberfläche und eine dicke Randzone auf.

### Beispiel 3

90 Teile des Polyethers der OH-Zahl 27 gemäss Beispiel 1, 25 Teile Ethylenglykol, 5 Teile Russpaste gemäss Beispiel 1, 0,6 Teile Triethylendiamin, 0,05 Teile Dibutylzinndilaurat, 5 Teile Trichlorfluormethan, 1 Teil der Polymerisatlösung C und 1 Teil Zinkstearat werden zu einer Polyolkomponente vereinigt.

Als Polyisocyanat-Komponente dient ein Gemisch mit einem NCO-Gehalt von 24,5% und einer Viskosität bei 25 °C von 300 mPa.s aus a) 75 Teilen des modifizierten Polyisocyanats gemäss Beispiel 1 und b) 25 Teilen eines teilweise carbodiimidisierten 4,4'-Diisocyanatodiphenylmethans (NCO-Gehalt = 30%).

Die Polyolkomponente und die Polyisocyanat-Komponente werden unter Einhaltung eines Gewichtsverhältnisses von 123:100 (NCO-Kennzahl = 105) bei der Herstellung von massiven Formteilen zur Umsetzung gebracht. Hierzu werden die Komponenten unter Verwendung einer Hochdruckkolbendosiermaschine (HK 165 der Firma Hennecke, Sankt Augustin), die mit einem Zweikomponenten-Mischkopf ausgerüstet war, miteinander vermischt und das Reaktionsgemisch in eine geschlossene Aluminiumform der Abmessung 120 × 20 × 0,4 cm eingefüllt. Die Forminnenwände wurden vorab mit einem handelsüblichen Trennmittel (Fluoricon® 36/38 der Firma Acmos) beschichtet.

**Maschinendaten**

| | |
|---|---|
| Einfüllzeit: | 1,5 Sekunden |
| Rohstofftemperatur: | 35 °C |
| Formtemperatur: | 60 °C |
| Formstandzeit: | 90 Sekunden. |

**Mechanische Daten**

| | |
|---|---|
| Dichte (kg/m$^3$): | 1050 |
| Härte (Shore D): | 64 |
| Zugfestigkeit (MPa): | 28 |
| Dehnung (%): | 210 |
| G-Modul (MPa): | (−30 °C) 420 |
| | (+20 °C) 180 |
| | (+65 °C) 90 |
| Biegemodul (MPa): | 480 |
| Sag-Wert (1 h, 120 °C) (mm): | 8 |

Die Formkörper weisen eine einwandfreie glatte schwarze Oberfläche auf.

### Patentansprüche

1. Verfahren zur Herstellung von gegebenenfalls zellförmigen Formkörpern auf Polyurethan-

und/oder Polyharnstoff-Basis mit einer geschlossenen Oberfläche durch Umsetzung in einer geschlossenen Form eines Reaktionsgemisches aus

a) mindestens einem organischen Polyisocyanat,

b) mindestens einer Verbindung mit einem Molekulargewicht zwischen 400 und 12 000, welche mindestens zwei gegenüber Isocyanatgruppen reaktionsfähige Gruppen aufweist,

c) gegebenenfalls mindestens einer Verbindung mit einem Molekulargewicht zwischen 32 und 399 mit mindestens zwei gegenüber Isocyanatgruppen reaktionsfähigen Gruppen, und

d) gegebenenfalls den in der Polyurethanchemie an sich bekannten Hilfs- und Zusatzstoffen, dadurch gekennzeichnet, dass man dem Reaktionsgemisch vor der Umsetzung oberflächenverbessernde Zusatzmittel e), bestehend aus den Einzelkomponenten

e1) mindestens einem, bei Raumtemperatur flüssigen, im Reaktionsgemisch löslichen, gegenüber Isocyanatgruppen inerten Polymerisat oder Copolymerisat des dampfdruckosmometrisch bestimmbaren Molekulargewichts 200 bis 50 000 mindestens eines olefinisch ungesättigten Monomeren in einer Menge von 0,01 bis 1 Gew.-%, bezogen auf die Komponente b), und

e2) mindestens ein Carboxylat eines Metalls der 1.-3. Hauptgruppe oder der 2. Nebengruppe des Periodensystems der Elemente auf Basis einer Monocarbonsäure mit mindestens 8 Kohlenstoffatomen, in einer Menge von 0,01 bis 2 Gew.-%, bezogen auf die Komponente b), einverleibt.

2. Verfahren gemäss Anspruch 1, dadurch gekennzeichnet, dass man als Komponente a) ein bei Raumtemperatur flüssiges, gegebenenfalls carbodiimid-, uretonimin- oder urethanmodifiziertes Polyisocyanat oder Polyisocyanatgemisch der Diphenylmethanreihe verwendet.

3. Verfahren gemäss Anspruch 1 und 2, dadurch gekennzeichnet, dass man als Komponente b) mindestens ein di- oder trifunktionelles Polyetherpolyol des Molekulargewichtsbereichs 1000 bis 7000 verwendet.

4. Verfahren gemäss Anspruch 1 bis 3, dadurch gekennzeichnet, dass man als Komponente c) (i) mindestens ein aromatisches Diamin, welches in ortho-Stellung zu einer ersten Aminogruppe mindestens einen Alkylsubstituenten mit 1 bis 3 Kohlenstoffatomen und in beiden ortho-Stellungen zur zweiten Aminogruppe Alkylsubstituenten mit 1 bis 3 Kohlenstoffatomen aufweisen, und/oder (ii) aliphatische Diole des Molekulargewichtsbereichs 62 bis 200 in einer Gesamtmenge von 10 bis 40 Gew.-%, bezogen auf die Komponente b) verwendet.

5. Verfahren gemäss Anspruch 1 bis 4, dadurch gekennzeichnet, dass man die Umsetzung in Gegenwart eines organischen Treibmittels durchführt.

6. Verfahren gemäss Anspruch 1 bis 5, dadurch gekennzeichnet, dass man als Komponente e1) ein Polymerisat bzw. Copolymerisat des dampfdruckosmometrisch bestimmbaren Molekulargewichts 2000–30 000 von 50 bis 100 Gew.-Teilen mindestens eines $C_1$–$C_{18}$-Alkylesters der Acryl- oder Methacrylsäure und 0 bis 50 Gew.-Teilen anderer olefinisch ungesättigter, gegenüber Isocyanatgruppen inerter Monomeren verwendet.

7. Verfahren gemäss Anspruch 1 bis 6, dadurch gekennzeichnet, dass man als Komponente e2) ein Zinksalz verwendet.

8. Verfahren gemäss Anspruch 1 bis 7, dadurch gekennzeichnet, dass man die Reaktionspartner nach dem Einstufen-Verfahren durch Vermischen der Komponente a) mit der Komponente b) oder mit einem Gemisch aus den Komponenten b) und c) unter Einhaltung einer NCO-Kennzahl von 70 bis 130 zur Reaktion bringt, wobei man die Komponenten d) und e) vorab einer oder beiden Reaktionskomponenten zumischt.

**Claims**

1. Process for the production of optionally cellular moulded articles based on polyurethane and/or polyurea having a non-cellular surface, by the reaction, inside a closed mould, of a reaction mixture of

a) at least one organic polyisocyanate,

b) at least one compound having a molecular weight of from 400 to 12,000 and containing at least two isocyanate reactive groups,

c) optionally at least one compound having a molecular weight of from 32 to 399 and containing at least two isocyanate reactive groups, and

d) optionally auxiliary agents and additives conventionally used in polyurethane chemistry, characterised in that surface improving additives e) consisting of the following individual components:

e1) from 0.01 to 1% by weight, based on component b), of at least one isocyanate inert polymer or copolymer of at least one olefinically unsaturated monomer, which polymer or copolymer is liquid at room temperature and soluble in the reaction mixture and has a molecular weight, determined by vapour pressure osmometry, of from 200 to 50,000 and

e2) from 0.01 to 2% by weight, based on component b), of at least one carboxylate of a metal of the first to third Main Group or the second sub-Group of the Periodic System of Elements based on a monocarboxylic acid having at least 8 carbon atoms, are incorporated in the reaction mixture before the reaction.

2. Process according to claim 1, characterised in that a polyisocyanate or polyisocyanate mixture of the diphenylmethane series which is liquid at room temperature and optionally modified with carbodiimide, uretonimine or urethane groups is used as component a).

3. Process according to claims 1 and 2, characterised in that at least one di- or trifunctional polyether polyol in the molecular weight range of from 1000 to 7000 is used as component b).

4. Process according to claims 1 to 3, characterised in that (i) at least one aromatic diamine having at least one alkyl substituent with 1 to 3 carbon atoms in the ortho-position to a first amino group and alkyl substituents with 1 to 3 carbon atoms in both ortho-positions to the second amino group and/or (ii) aliphatic diols in the molecular weight range of from 62 to 200 are used as component c) in a total quantity of from 10 to 40% by weight, based on component b).

5. Process according to claims 1 to 4, characterised in that the reaction is carried out in the presence of an organic blowing agent.

6. Process according to claims 1 to 5, characterised in that a polymer or copolymer having a molecular weight of from 2000 to 30,000 as determined by vapour pressure osmometry of from 50 to 100 parts by weight of at least one $C_1$–$C_{18}$-alkyl ester of acrylic or methacrylic acid and from 0 to 50 parts by weight of other olefinically unsaturated monomers which are inert towards isocyanate groups is used as component e1).

7. Process according to claims 1 to 6, characterised in that a zinc salt is used as component e2).

8. Process according to claims 1 to 7, characterised in that the components are reacted together by the one-step process by mixing component a) with component b) or with a mixture of components b) and c) in proportions corresponding to an isocyanate index of from 70 to 130, components d) and e) having been previously added to one or both reactants.

**Revendications**

1. Procédé de production de pièces moulées éventuellement cellulaires à base de polyuréthannes et/ou de polyurées à surface fermée, par réaction, dans un moule fermé, d'un mélange constitué

a) d'au moins un polyisocyanate organique,

b) d'au moins un composé de poids moléculaire compris entre 400 et 12 000, qui présente au moins deux groupes aptes à réagir vis-à-vis de groupes isocyanato,

c) le cas échéant, d'au moins un composé de poids moléculaire compris entre 32 et 399 portant au moins deux groupes aptes à réagir vis-à-vis de groupes isocyanato, et

d) le cas échéant, des adjuvants et additifs d'emploi connu dans la chimie des polyuréthannes, caractérisé en ce qu'on incorpore dans le mélange réactionnel avant la réaction, des additifs e) améliorant la surface, constitués de composants individuels comprenant

e1) au moins un polymère ou copolymère liquide à la température ambiante, soluble dans le mélange réactionnel, inerte vis-à-vis de groupes isocyanato, de poids moléculaire, déterminable par osmométrie de tension de vapeur, allant de 200 à 50 000, d'au moins un monomère à non-saturation oléfinique en une quantité de 0,01 à 1% en poids par rapport au composant b), et

e2) au moins un carboxylate d'un métal des premier à troisième groupes principaux ou du second sous-groupe du Système Périodique des Eléments à base d'un acide monocarboxylique ayant au moins 8 atomes de carbone, en une quantité de 0,01 à 2% en poids par rapport au composant b).

2. Procédé suivant la revendication 1, caractérisé en ce qu'on utilise comme composant a) un polyisocyanate de la série du diphénylméthane liquide à la température ambiante, éventuellement modifié par un carbodiimide, une urétone-imine ou un uréthanne, ou un mélange de tels polyisocyanates.

3. Procédé suivant les revendications 1 et 2, caractérisé en ce qu'on utilise comme composant b) au moins un polyétherpolyol difonctionnel ou trifonctionnel de poids moléculaire compris dans l'intervalle de 1000 à 7000.

4. Procédé suivant les revendications 1 à 3, caractérisé en ce qu'on utilise comme composant c) (i) au moins une diamine aromatique qui présente en position ortho par rapport à un premier groupe amino au moins un substituant alkyle de 1 à 3 atomes de carbone et, dans les deux positions ortho par rapport au second groupe amino, des substituants alkyle de 1 à 3 atomes de carbone, et/ou (ii) des diols aliphatiques de poids moléculaire compris dans l'intervalle de 62 à 200 en une quantité totale de 10 à 40% en poids par rapport au composant b).

5. Procédé suivant les revendications 1 à 4, caractérisé en ce que la réaction est conduite en présence d'un agent organique porogène.

6. Procédé suivant les revendications 1 à 5, caractérisé en ce qu'on utilise comme composant e1) un produit de polymérisation ou de copolymérisation, de poids moléculaire, déterminable par osmométrie de tension de vapeur, de 2000 à 30 000, de 50 à 100 parties en poids d'au moins un ester d'alkyle en $C_1$ à $C_{18}$ d'acide acrylique ou d'acide méthacrylique et de 0 à 50 parties en poids d'autres monomères à non-saturation oléfinique, inertes vis-à-vis de groupes isocyanato.

7. Procédé suivant les revendications 1 à 6, caractérisé en ce qu'on utilise comme composant e2) un sel de zinc.

8. Procédé suivant les revendications 1 à 7, caractérisé en ce qu'on fait réagir les partenaires réactionnels selon le procédé à une seule étape par mélange du composant a) avec le composant b) ou avec un mélange des composants b) et c) en maintenant un indice de NCO de 70 à 130, les composants d) et e) étant mélangés au préalable avec l'un des composants réactionnels ou les deux.